# EUROPEAN PATENT APPLICATION

(11) **EP 2 236 378 A1**
(43) Date of publication of application: **06.10.2010**
(21) Application number: 10156957.2
(22) Date of filing: 18.03.2010
(51) Int. Cl.: B60W 40/08, G01F 9/00, G05B 15/02, G01C 21/36, G08G 1/16

(54) **Vehicle operation diagnosis device, vehicle operation diagnosis method and computer program**

(30) Priority: 31.03.2009 JP 2009085445
(71) Applicant: AISIN AW CO., LTD., Anjo-shi, Aichi-ken 444-1192 (JP)
(72) Inventor: Nakayama, Takaaki, ANJO-SHI, AICHI-KEN 444-1192 (JP)
(74) Representative: Joly, Jean-Jacques

(57) **Abstract**

The invention relates to a vehicle operation diagnosis device (1) and method for diagnosing vehicle operation of a driver and determining whether or not to provide advice relating to the vehicle operation if a result of the diagnosis has met a predetermined provisioning condition; providing the advice relating to the vehicle operation if it has been determined to provide the advice; and comparing the vehicle operation of the driver before the advice was provided with the vehicle operation of the driver after the advice was provided, wherein it is determined at the advice provision determination step whether or not to provide the advice, based on a comparison result at the vehicle operation comparison step when the advice was provided at the advice provision step in the past.

## Description

### BACKGROUND OF THE INVENTION

### 1. Field of the Invention

The present invention relates to a vehicle operation diagnosis device, a vehicle operation diagnosis method and a computer program, which provide a driver with advice relating to vehicle operation.

### 2. Description of the Related Art

Recently, a system is known, which, in order to improve an environmental driving technology and a safe driving technology of the driver and in order to get the driver interested in environmental problems and safe driving, diagnoses whether or not the vehicle operation performed by the driver during driving was appropriate in terms of environment and safety and provides the advice. For example, Japanese Patent Application; Publication No. 2007-293626 (pages 7 to 9, figs. 2 to 4) discloses a system that determines whether or not a user is performing the environmental driving and the safe driving based on a diagnosis criteria set toward each of a plurality of diagnosis items such as an "idling duration", a "fuel consumption", an "inter-vehicle distance", a "speed limit", a "sudden braking", a "deceleration in front of a curve", assigns a point if it has been determined that the user is performing the environmental driving and the safe driving, further provides the advice when the number of the assigned points reaches more than a predetermined point number.

By referring to the advice in terms of the environment provided by the aforementioned system, the driver is able to learn contents of the vehicle operation appropriate to contribute to the protection of the environment. As a result, it becomes possible to motivate the driver to continue environmentally-friendly driving. In addition, by referring to the advice in terms of the safety, the driver is able to learn own characteristics of the vehicle operation and contents of the vehicle operation appropriate under each condition. As a result, the driver is able to conduct the more safe and appropriate vehicle operation. Further, it becomes possible to motivate the driver to continue the safe driving.

### SUMMARY OF THE INVENTION

Here, the aforementioned diagnosis system according to Japanese Patent Application; Publication No. 2007-293626 (pages 7 to 9, figs. 2 to 4) performs the diagnosis always based on the same diagnosis criteria for the same diagnosis item toward all the drivers, and provides the advice only based on the diagnosis result. However, for some drivers, it is better not to provide the advice even when the diagnosis result was a negative result.

For example, in the case of the diagnosis item of the "idling duration", if idling was continuously performed more than a predetermined duration (for example, more than 5 minutes), it is assumed to provide the advice to stop the idling. Or, in the case of the diagnosis item of the "sudden braking", if the sudden braking was performed, it is assumed to provide the advice to stop the sudden braking.

However, the driver living in a cold area needs to perform the idling while stopped in a winter season. In addition, the driver needs to perform the sudden braking if a vehicle or a pedestrian suddenly runs out or the like, even when the driver is normally conducting the safe driving. Conventional diagnosis systems such as the one disclosed by Japanese Patent Application; Publication No. 2007-293626 (pages 7 to 9, figs. 2 to 4) provide advice on correcting the vehicle operation if the diagnosis result was a negative result, even when such vehicle operation was essential and inevitable for the driver. The advice provided to the driver in such case is not the one determined after properly evaluating the drive operation of the driver. As a result, the provided advice makes the driver feel discomfort.

In light of the existing problems described above, it is an object of the present invention to provide the vehicle operation diagnosis device, the vehicle operation diagnosis method and the computer program, in which, if an advice provisioning condition has been met, it is determined whether or not to provide the advice based on a comparison result between the vehicle operation before the advice was provided and the vehicle operation after the advice was provided; therefore, the advice can be provided after properly evaluating the vehicle operation in terms of the environment and the safety in consideration of a situation of each driver.

To achieve the aforementioned object, a vehicle operation diagnosis device in a first aspect of the present invention comprises: an advice provision determination unit for diagnosing vehicle operation of a driver and determining whether or not to provide advice relating to the vehicle operation if a result of the diagnosis has met a predetermined provisioning condition; an advice provision unit for providing the advice relating to the vehicle operation if the advice provision determination unit has determined to provide the advice; and a vehicle operation comparison unit for comparing the vehicle operation of the driver before the advice was provided by the advice provision unit with the vehicle operation of the driver after the advice was provided by the advice provision unit, wherein the advice provision determination unit is configured to determine whether or not to provide the advice, based on a comparison result of the vehicle operation comparison unit when the advice was provided by the advice provision unit in the past.

The vehicle operation diagnosis device in a second aspect of the present invention is the vehicle operation diagnosis device according to the first aspect of the present invention, wherein the advice provision determination unit comprises an improvement determination unit for determining, based on the comparison result of the vehicle operation comparison unit when the advice was provided by the advice provision unit in the past, whether or not the vehicle operation of the driver after the advice was provided by the advice provision unit is improved compared to the vehicle operation of the driver before the advice was provided by the advice provision unit, wherein when the improvement determination unit has determined that the vehicle operation of the driver is not improved, even if the provisioning condition has been met, the improvement determination unit determines not to perform a provision of the advice by the advice provision unit.

The vehicle operation diagnosis device in a third aspect of the present invention is the vehicle operation diagnosis device according to the first aspect of the present invention, wherein the advice provision determination unit comprises: an improvement determination unit for determining, based on the comparison result of the vehicle operation comparison unit when the advice was provided by the advice provision unit in the past, whether or not the vehicle operation of the driver after the advice was provided by the advice provision unit is improved compared to the vehicle operation of the driver before the advice was provided by the advice provision unit; and a frequency acquisition unit for acquiring a frequency with which the result of the diagnosis for the vehicle operation of the driver met the provisioning condition, wherein when the improvement determination unit has determined that the vehicle operation of the driver is improved, if the frequency with which the provisioning condition was met is equal to or less than a predetermined frequency, the frequency acquisition unit determines not to perform a provision of the advice by the advice provision unit.

The vehicle operation diagnosis device in a fourth aspect of the present invention is the vehicle operation diagnosis device according to any one of the first to the third aspects of the present invention, wherein the advice provision determination unit is configured to determine whether or not to provide the advice based on the comparison result of the vehicle operation comparison unit when the advice on the basis of a same diagnosis result was provided by the advice provision unit in the past.

A vehicle operation diagnosis method in a fifth aspect of the present invention comprises the steps of: diagnosing vehicle operation of a driver and determining whether or not to provide advice relating to the vehicle operation if a result of the diagnosis has met a predetermined provisioning condition; providing the advice relating to the vehicle operation if it has been determined to provide the advice at the advice provision determination step; and comparing the vehicle operation of the driver before the advice was provided at the advice provision step with the vehicle operation of the driver after the advice was provided at the advice provision step, wherein it is determined at the advice provision determination step whether or not to provide the advice, based on a comparison result at the vehicle operation comparison step when the advice was provided at the advice provision step in the past.

A computer program in a sixth aspect of the present invention is installed in a computer, the computer program causing the computer to execute the functions of: diagnosing vehicle operation of a driver and determining whether or not to provide advice relating to the vehicle operation if a result of the diagnosis has met a predetermined provisioning condition; providing the advice relating to the vehicle operation if it has been determined to provide the advice by the advice provision determination function; and comparing the vehicle operation of the driver before the advice was provided by the advice provision function with the vehicle operation of the driver after the advice was provided by the advice provision function, wherein the advice provision determination function determines whether or not to provide the advice, based on a comparison result of the vehicle operation comparison function when the advice was provided by the advice provision function in the past.

In the vehicle operation diagnosis device in the first aspect of the present invention having the aforementioned elements, if the provisioning condition of the advice has been met, it is determined whether or not to provide the advice based on the comparison result between the vehicle operation before the advice was provided and the vehicle operation after the advice was provided. Therefore, the advice can be provided after properly evaluating the vehicle operation in terms of the environment and the safety in consideration of a situation of each driver. In addition, it becomes possible to motivate the driver to continue the environmentally-friendly driving and the safe driving, without giving the driver a discomfort feeling to the advice.

In the vehicle operation diagnosis device in the second aspect of the present invention, for the vehicle operation necessary for the driver (for example, the idling while stopped that the driver living in a cold area performs in the winter season) even if the provisioning condition of the advice is met, the advice on correcting the vehicle operation is not provided even when the diagnosis result was a negative result. Therefore, it is possible to prevent the advice from being provided each time the corresponding vehicle operation is performed.

In the vehicle operation diagnosis device in the third aspect of the present invention, for the vehicle operation inevitable for the driver such as a sudden braking in an emergency that rarely occurs even though the driver is normally performing appropriate driving in terms of the environment and the safety, the advice on correcting the vehicle operation is not provided even when the diagnosis result was a negative result. Therefore, it is possible to provide only the advice determined by properly evaluating the drive operation of the driver.

In the vehicle operation diagnosis device in the fourth aspect of the present invention, it is determined whether or not to provide the advice based on the comparison result of the vehicle operation between before and after the advice when the advice on the basis of a same diagnosis result was provided in the past. Therefore, it is possible to properly determine whether or not the advice for which the provisioning condition was met is the advice determined by adequately evaluating the drive operation of the driver.

In the vehicle operation diagnosis method in the fifth aspect of the present invention, if the provisioning condition of the advice has been met, it is determined whether or not to provide the advice based on the comparison result between the vehicle operation before the advice was provided and the vehicle operation after the advice was provided. Therefore, the advice can be provided after properly evaluating the vehicle operation in terms of the environment and the safety in consideration of a situation of each driver. In addition, it becomes possible to motivate the driver to continue the environmentally-friendly driving and the safe driving, without giving the driver a discomfort feeling to the advice.

In the computer program in the sixth aspect of the present invention, if the provisioning condition of the advice has been met, it is determined in the computer whether or not to provide the advice based on the comparison result between the vehicle operation before the advice was provided and the vehicle operation after the advice was provided. Therefore, the advice can be provided after properly evaluating the vehicle operation in terms of the environment and the safety in consideration of a situation of each driver. In addition, it becomes possible to motivate the driver to continue the environmentally-friendly driving and the safe driving, without giving the driver a discomfort feeling to the advice.

### BRIEF DESCRIPTION OF THE DRAWINGS

FIG. 1 is a block diagram showing a navigation device according to a first embodiment of the present invention.
FIG. 2 is a schematic diagram showing an example of a vehicle operation diagnosis determination table.
FIG. 3 is a flowchart of a vehicle operation diagnosis processing program according to the first embodiment of the present invention.
FIG. 4 shows an advice provision screen displayed on a liquid crystal display.
FIG. 5 is a flowchart of a vehicle operation learning processing program according to the first embodiment of the present invention.
FIG. 6 is a flowchart of the vehicle operation diagnosis processing program according to a second embodiment of the present invention.

### DETAILED DESCRIPTION OF THE PREFERRED EMBODIMENT

The vehicle operation diagnosis device according to the present invention realized in a navigation device is described in further detail below with reference to a first embodiment and a second embodiment in conjunction with the accompanying drawings.

### [First embodiment]

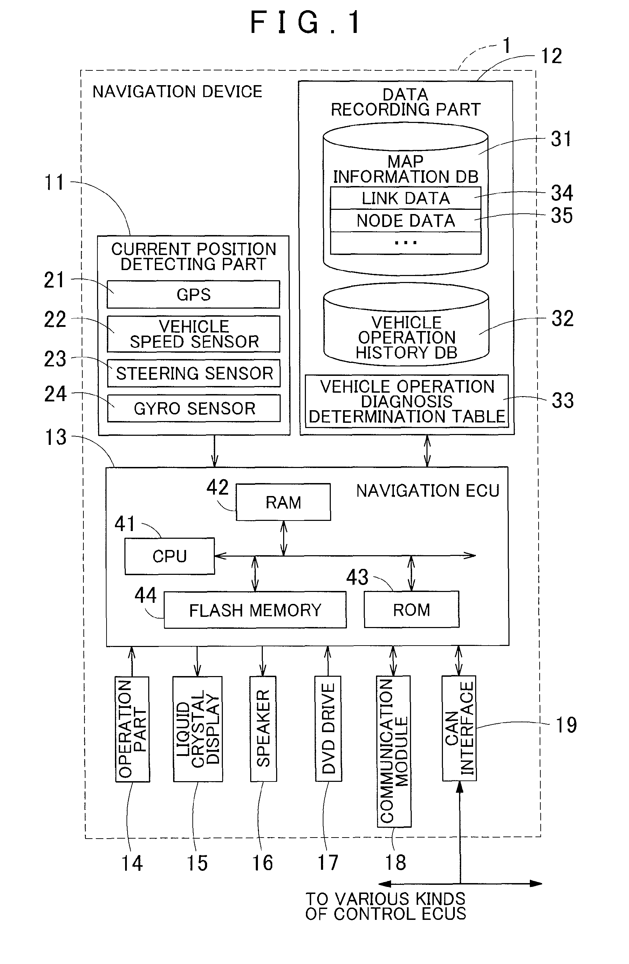

First, a rough structure of a navigation device 1 according to the first embodiment is described with reference to FIG. 1. FIG. 1 is a block diagram showing the navigation system 1 according to the first embodiment.

As shown in FIG. 1, the navigation device 1 according to the first embodiment includes: a current position detecting part 11 that detects a current position of a vehicle; a data recording part 12 in which various data is recorded; a navigation ECU (an advice provision determination unit, an advice provision unit, a vehicle operation comparison unit, an improvement determination unit, a frequency acquisition unit) 13 that executes various computing processing; an operation part 14 that receives operation from a user; a liquid crystal display 15 that displays a map and various information relating to advice based on a result of a diagnosis of vehicle operation of a driver or the like to the user; a speaker 16 that outputs voice guidance relating to route guidance; a DVD drive 17 that reads DVD as a storage medium storing a program; a communication module 18 that performs communication with information center such as traffic information center; and a CAN interface 19.

Hereinafter, the respective components composing the navigation device 1 are described.

The current position detecting part 11 is formed of a GPS 21, a vehicle speed sensor 22, a steering sensor 23, a gyro sensor 24, an altimeter (not shown) and the like, and can detect a current position and a direction of a vehicle, a traveling speed of the vehicle and the like. Here, in particular, the vehicle speed sensor 22 is a sensor for detecting a moving distance and a speed of the vehicle, generates pulses in accordance with a rotation of wheels of the vehicle, and outputs pulse signals to the navigation ECU 13. Subsequently, by counting the number of generated pulses, the navigation ECU 13 calculates a rotation speed of the wheels and the moving distance. Note that the navigation device 1 is not required to include all the aforementioned four kinds of sensors, and the navigation device 1 may include only one or a plurality of kinds of sensors among them.

The data recording part 12 is provided with a hard disk (not shown) serving as an external storage device and a recording medium, and a recording head (not shown) serving as a driver for reading a map information DB 31, a vehicle operation history DB 32, a vehicle operation diagnosis determination table 33, and a predetermined program and the like, which are recorded in the hard disk, and writing predetermined data in the hard disk.

Here, in the map information DB 31, various kinds of map data required for conducting route guidance and traffic information guidance and for displaying a map are recorded.

The map data is formed of link data 34 regarding road (link) shapes, node data 35 regarding node points, POI data that is information regarding points such as facilities, intersection data regarding respective intersections, search data for searching for routes, search data for searching for points, image drawing data for drawing images of a map, roads, traffic information and the like on the liquid crystal display 15, and the like.

In the vehicle operation history DB 32, histories of the vehicle operation of the driver performed in the past are accumulated and stored. The navigation ECU 13 compares between the vehicle operation histories of the driver before the advice was provided and after the advice was provided based on the vehicle operation histories of the driver stored in the vehicle operation history DB 32 as described later, and determines whether or not the vehicle operation of the driver after the advice was provided is improved compared to the vehicle operation of the driver before the advice was provided.

In addition, in performing processing to diagnose whether or not the vehicle operation performed by the driver during driving was appropriate in terms of environment and safety (hereinafter referred to as vehicle operation diagnosis processing), the vehicle operation diagnosis determination table 33 is used for diagnosing whether or not the vehicle operation performed by the driver during driving was appropriate in terms of the environment and the safety. In the vehicle operation diagnosis determination table 33, a plurality of diagnosis items, an advice provisioning condition that is set to each diagnosis item, and content of the advice to be provided if the advice provisioning condition has been met are associated and stored.

In the vehicle operation diagnosis processing, the navigation ECU 13 performs the diagnosis for each diagnosis item by comparing the vehicle operation (for example, an idling duration, a sudden braking, and the like) of the driver relating to the advice provisioning condition with the advice provisioning condition. And, the navigation ECU 13 determines whether or not a diagnosis result has met the advice provisioning condition. As a result, if it has been determined that the advice provisioning condition has been met, the navigation ECU 13 provides the advice associated with the advice provisioning condition that has been met. However, as described later, when comparing between the vehicle operation histories of the driver before the advice was provided and after the advice was provided when the advice on the basis of the same diagnosis result (for example, the idling was continuously performed for more than 5 min.) was provided in the past, if it has been determined that the vehicle operation of the driver after the advice was provided is not improved compared to before the advice was provided, the navigation ECU 13 does not perform a provision of the advice even if the advice provisioning condition has been met.

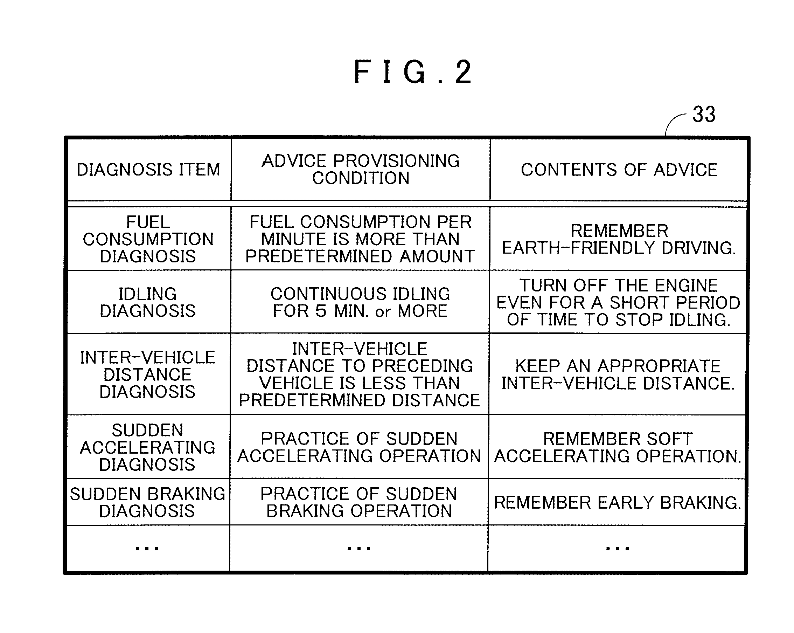

Hereinafter, the vehicle operation diagnosis processing is described with reference to a plurality of examples using FIG. 2. FIG. 2 shows an example of the vehicle operation diagnosis determination table 33.

As shown in FIG. 2, for example, in case of a "fuel consumption diagnosis" that is one of the diagnosis items for diagnosing the vehicle operation of the driver in terms of the environment, the navigation ECU 13 diagnoses for the fuel consumption of the vehicle. If the diagnosis result has met the advice provisioning condition (the fuel consumption per minute of the vehicle is more than a predetermined amount), the navigation ECU 13 provides the advice on decreasing the fuel consumption to contribute to the protection of the environment. Specifically, the navigation ECU 13 provides the advice as "Remember earth-friendly driving."

In case of an "idling diagnosis" that is one of the diagnosis items for diagnosing the vehicle operation of the driver in terms of the environment, the navigation ECU 13 diagnoses for idling duration of the vehicle. If the diagnosis result has met the advice provisioning condition (continuous idling for 5 min. or more), the navigation ECU 13 provides the advice on decreasing the idling duration to contribute to the protection of the environment. Specifically, the navigation ECU 13 provides the advice as "Turn off the engine even for a short period of time to stop idling."

In case of an "inter-vehicle distance diagnosis" that is one of the diagnosis items for diagnosing the vehicle operation of the driver in terms of the safety, if another vehicle exists ahead of the host vehicle in relation to a travel direction, the navigation ECU 13 diagnoses for an inter-vehicle distance to a preceding vehicle. If the diagnosis result has met the advice provisioning condition (the inter-vehicle distance to the preceding vehicle is less than a predetermined distance), the navigation ECU 13 provides the advice on increasing the inter-vehicle distance to conduct safe driving. Specifically, the navigation ECU 13 provides the advice as "Keep an appropriate inter-vehicle distance."

In case of a "sudden accelerating diagnosis" that is one of the diagnosis items for diagnosing the vehicle operation of the driver in terms of the safety, the navigation ECU 13 diagnoses for sudden accelerating operation of the vehicle. If the diagnosis result has met the advice provisioning condition (practice of the sudden accelerating operation), the navigation ECU 13 provides the advice on avoiding the sudden accelerating operation to conduct the safe driving. Specifically, the navigation ECU 13 provides the advice as "Remember soft accelerating operation."

In case of a "sudden braking diagnosis" that is one of the diagnosis items for diagnosing the vehicle operation of the driver in terms of the safety, the navigation ECU 13 diagnoses for sudden braking operation of the vehicle. If the diagnosis result has met the advice provisioning condition (practice of the sudden braking operation), the navigation ECU 13 provides the advice on avoiding the sudden braking operation to conduct the safe driving. Specifically, the navigation ECU 13 provides the advice as "Remember early braking."

Note that, in the vehicle operation diagnosis processing, deceleration in front of a temporary stop line, seatbelt usage, and the like are also diagnosed although the explanation is omitted.

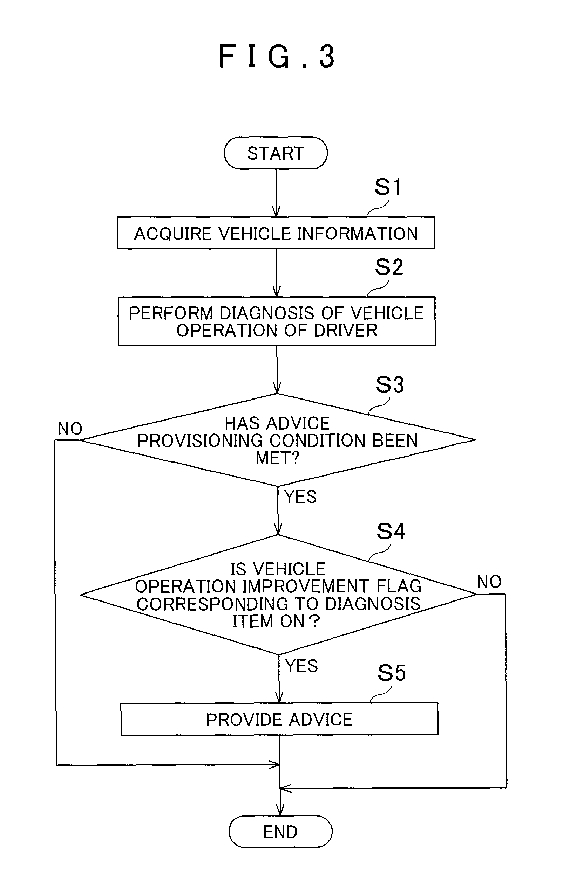

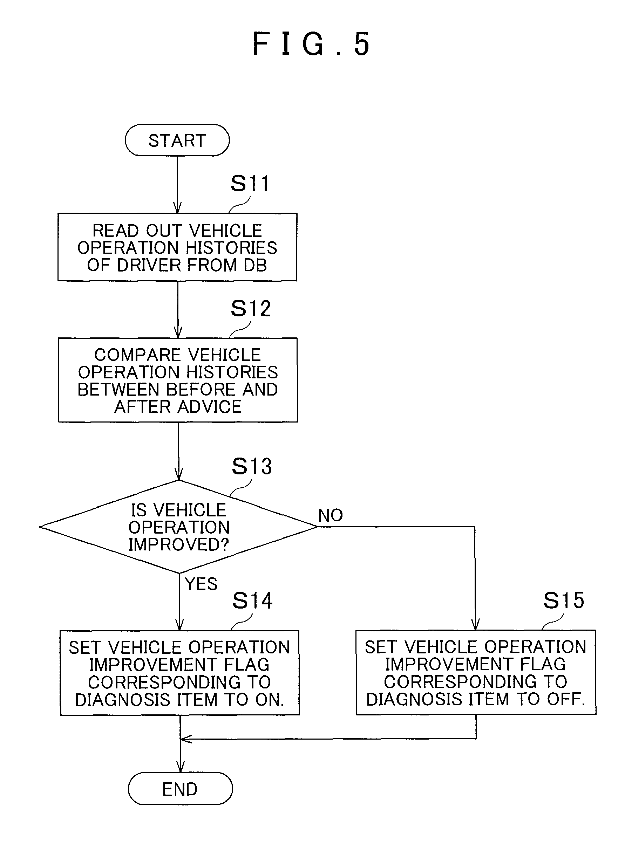

On the other hand, the navigation ECU (electric control unit) 13 performs overall control of the navigation device 1 such as guidance route setting processing for setting guidance route from the current position to a destination if the destination has been selected, the vehicle operation diagnosis processing for diagnosing whether or not the vehicle operation performed by the driver during driving was appropriate in terms of the environment and the safety, and the like. Further, the navigation ECU 13 includes a CPU 41 serving as a computing device and a control device, and internal storage devices such as a RAM 42 used as a working memory when the CPU 41 executes various computing processing and in which route data or the like when the route has been searched is stored, a ROM 43 which records a program for control, a vehicle operation diagnosis processing program (refer to FIG. 3), a vehicle operation learning processing program (refer to FIG. 5), and the like, and a flash memory 44 which records a program read from the ROM 43.

The operation part 14 is operated when inputting a departure point as a travel start point and a destination as a travel end point, and the like, and is formed of a plurality of operation switches (not shown) such as various kinds of keys and buttons. Based on switch signals outputted when the respective switches are pressed, or the like, the navigation ECU 13 performs a control so as to execute various kinds of operation corresponding to the switch signals. Note that the operation part 14 may be formed of a touch panel provided on a front face of the liquid crystal display 15.

On the liquid crystal display 15, a map image including roads, traffic information, operation guidance, operation menus, key guidance, a guidance route from the current position to the destination, guidance information along the guidance route, news, weather forecasts, time, mails, TV programs and the like are displayed. If the diagnosis of the vehicle operation of the driver has been performed, the diagnosis result is displayed.

The speaker 16 outputs voice guidance for guiding to travel along the guidance route based on an instruction from the navigation ECU 13 and guidance regarding traffic information. If the diagnosis of the vehicle operation of the driver has been performed, the diagnosis result is provided by audio.

The DVD drive 17 is a drive capable of reading data recorded in a recording medium such as a DVD and a CD. An update of the map information DB 31 or the like is conducted based on the read data.

The communication module 18 is a communication device for receiving traffic information including various information such as congestion information, traffic regulation information, and traffic accident information transmitted from a traffic information center such as, for instance, a VICS (registered trademark: Vehicle Information and Communication System) center and a probe center. Examples of the communication module 18 include a cellular phone or a DCM.

The CAN (controller area network) interface 19 performs inputs and outputs of data toward a CAN that is an in-vehicle network standard for performing multiplex communication between various kinds of control ECUs provided in the vehicle. The navigation ECU 13 is connected via the CAN to various kinds of control ECUs that control the vehicle (for example, an accelerator control ECU, a brake control ECU, an engine control ECU, a millimeter waves radar control ECU, and the like) such that the navigation ECU 13 and the various kinds of control ECUs are communicable each other. In addition, the navigation ECU 13 performs the diagnosis of the vehicle operation of the driver, as described later, based on respective parameters (an accelerator opening level, a braking volume, presence or absence of idling, the fuel consumption, the inter-vehicle distance to the preceding vehicle) acquired from the respective various kinds of control ECUs via the CAN.

Subsequently, the vehicle operation diagnosis processing program to be executed in the navigation device 1 including the above structure is described with reference to FIG. 3. FIG. 3 is a flowchart of the vehicle operation diagnosis processing program according to the first embodiment. The vehicle operation diagnosis processing program here is executed at intervals of a predetermined time (for example, every 200 msec) after an ACC of the vehicle has been turned on, and diagnoses whether or not the vehicle operation performed by the driver was appropriate in terms of the environment and the safety. Programs shown with flowcharts in FIGS. 3 and 5 are stored in the RAM 42, the ROM 43, or the like provided in the navigation ECU 13, and executed by the CPU 41.

First, at Step (hereinafter referred to as S) 1 in the vehicle operation diagnosis processing program, the CPU 41 acquires vehicle information relating to the vehicle (specifically, a vehicle speed, the accelerator opening level, the braking volume, the presence or absence of idling, the fuel consumption, the inter-vehicle distance to the preceding vehicle, and the like) through various sensors such as the vehicle speed sensor 22, the steering sensor 23, the gyro sensor 24, and the like, or the CAN.

Next, at S2, the CPU 41 performs the diagnosis of the vehicle operation of the driver based on the vehicle information acquired at S1. Specifically, the CPU 41 performs the diagnosis based on the vehicle information acquired at S1 and the vehicle operation diagnosis determination table 33 (refer to FIG. 2), by comparing the vehicle operation (for example, the idling duration, the sudden braking operation, and the like) of the driver relating to the advice provisioning condition set for each diagnosis item with the advice provisioning condition. And, it is determined whether or not the advice provisioning condition of any of the diagnosis items has been met.

Subsequently, at S3, the CPU 41 determines from the result of the vehicle operation diagnosis at S2 whether or not the advice provisioning condition of any of the diagnosis items has been met. If it has been determined that the advice provisioning condition of any of the diagnosis items has been met (S3: YES), the procedure goes to S4. On the other hand, if it has been determined that the advice provisioning condition of any of the diagnosis items has not been met (S3: NO), the vehicle operation diagnosis processing program is terminated without performing a provision of the advice.

At S4, the CPU 41 reads out from the RAM 42 a vehicle operation improvement flag corresponding to the diagnosis item to which it has been determined that the advice provisioning condition has been met, and determines whether or not the flag is ON. The vehicle operation improvement flag here indicates whether or not the vehicle operation of the driver is improved after the advice was provided. After comparing between the vehicle operation histories of the driver before the advice was provided and after the advice was provided in an after-mentioned vehicle operation learning processing program (refer to FIG. 5), if it has been determined that the vehicle operation of the driver after the advice was provided is improved compared to before the advice was provided, the CPU 41 sets the vehicle operation improvement flag of the diagnosis item relating to the provided advice to ON. On the other hand, if it has been determined that the vehicle operation of the driver is not improved, the CPU 41 sets the vehicle operation improvement flag of the diagnosis item relating to the provided advice to OFF.

That is, the CPU 41 determines at S4 whether or not the vehicle operation of the driver after the advice was provided is improved compared to before the advice was provided, when the advice on the basis of the same diagnosis result was provided in the past.

If it has been determined that the vehicle operation improvement flag corresponding to the diagnosis item to which it has been determined that the advice provisioning condition has been met is ON (S4: YES), that is, if the vehicle operation of the driver after the advice was provided is improved compared to before the advice was provided when the advice on the basis of the same diagnosis result was provided in the past, the procedure goes to S5. On the other hand, if it has been determined that the vehicle operation improvement flag corresponding to the diagnosis item to which it has been determined that the advice provisioning condition has been met is OFF (S4: NO), that is, if the vehicle operation of the driver after the advice was provided is not improved compared to before the advice was provided when the advice on the basis of the same diagnosis result was provided in the past, the vehicle operation diagnosis processing program is terminated without performing a provision of the advice. As a result, for the vehicle operation necessary for the driver (for example, the idling while stopped that the driver living in a cold area performs in the winter season) even if the advice provisioning condition is met, it is possible to prevent the advice from being provided each time the corresponding vehicle operation is performed.

At S5, the CPU 41 provides the driver with the advice associated with the advice provisioning condition that has been met using the liquid crystal display 15 and the speaker 16.

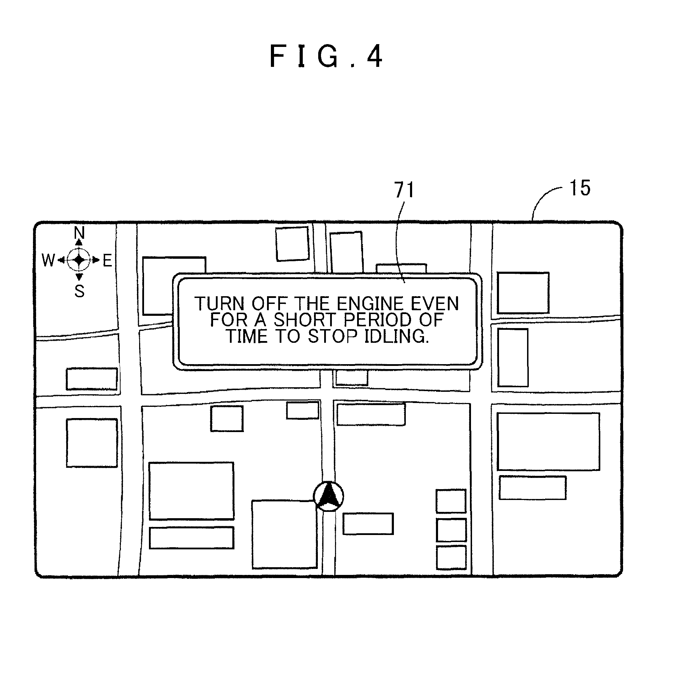

FIG. 4 shows an advice provision screen displayed on the liquid crystal display 15 at S5. Note that FIG. 4 shows an example of the advice provision screen displayed when idling was continuously performed for 5 minutes or more in the vehicle, if the advice relating to the idling diagnosis had been provided in the past and the vehicle operation of the driver is improved after the advice had been provided. In the advice provision screen, to prompt to decrease the idling duration to contribute to the protection of the environment, a message as "Turn off the engine even for a short period of time to stop idling." is displayed in a window 71 allocated on a map screen. Accordingly, it is possible to prompt the driver to decrease the idling duration at the next and subsequent times.

Next, the vehicle operation learning processing program to be executed in the navigation device 1 is described with reference to FIG. 5. FIG. 5 is a flowchart of the vehicle operation learning processing program according to the first embodiment. The vehicle operation learning processing program is executed at a predetermined time (for example, within 24 hours) after the advice was provided at S5, and determines whether or not the vehicle operation of the driver is improved after the advice was provided.

First, at S 11 in the vehicle operation learning processing program, the CPU 41 reads out the vehicle operation histories of the driver within a predetermined time (for example, within 24 hours) before and after the advice was provided at S5 from the vehicle operation history DB 32.

Next, at S12, the CPU 41 compares between the vehicle operation histories of the driver before the advice was provided and after the advice was provided. Note that the vehicle operation of the driver relating to the provided advice (for example, the idling duration in case that the advice relating to the idling duration was provided) is compared.

At S13, the CPU 41 determines whether or not the vehicle operation of the driver after the advice was provided is improved compared to before the advice was provided, based on the comparison result of the vehicle operation histories of the driver at S12. Specifically, when the advice relating to the idling duration was provided, if a total time of the idling after the advice was provided is shorter than the one before the advice was provided, the CPU determines that the vehicle operation of the driver is improved. When the advice relating to the sudden braking was provided, if the number of practices of the sudden braking after the advice was provided is smaller than the one before the advice was provided, the CPU 41 determines that the vehicle operation of the driver is improved.

As a result of the determination at S13, if it has been determined that the vehicle operation of the driver after the advice was provided is improved compared to before the advice was provided (S13: YES), the CPU 41 reads out from the RAM 42 the vehicle operation improvement flag corresponding to the diagnosis item of the provided advice and sets the flag to ON (S14).

On the other hand, if it has been determined that the vehicle operation of the driver after the advice was provided is not improved compared to before the advice was provided (S13: NO), the CPU 41 reads out from the RAM 42 the vehicle operation improvement flag corresponding to the diagnosis item of the provided advice and sets the flag to OFF (S15). Then, the vehicle operation learning processing program is terminated.

As described in detail above, in the navigation device 1 according to the first embodiment, a vehicle operation diagnosis method by the navigation device 1, and a computer program executed by the navigation ECU 13 of the navigation device 1, as a result of the diagnosis of the vehicle operation of the driver, if it has been determined that the advice provisioning condition set for each diagnosis item has been met, it is determined whether or not the vehicle operation of the driver after the advice was provided is improved compared to before the advice was provided when the advice on the basis of the same diagnosis result was provided in the past (S4); if it has been determined that the vehicle operation of the driver is not improved, the provision of the advice is not performed. Therefore, the advice can be provided after properly evaluating the vehicle operation in terms of the environment and the safety in consideration of a situation of each driver. In addition, it becomes possible to motivate the driver to continue the environmentally-friendly driving and the safe driving, without giving the driver a discomfort feeling to the advice.

For the vehicle operation necessary for the driver (for example, the idling while stopped that the driver living in a cold area performs in the winter season) even if the provisioning condition of the advice is met, the advice on correcting the vehicle operation is not provided even when the diagnosis result was a negative result. Therefore, it is possible to prevent the advice from being provided each time the corresponding vehicle operation is performed.

In addition, it is determined whether or not to provide the advice based on the comparison result of the vehicle operation between before and after the advice was provided, when the advice on the basis of the same diagnosis result was provided in the past. Therefore, it is possible to properly determine whether or not the advice for which the provisioning condition was met is the advice determined after adequately evaluating the drive operation of the driver.

### [Second embodiment]

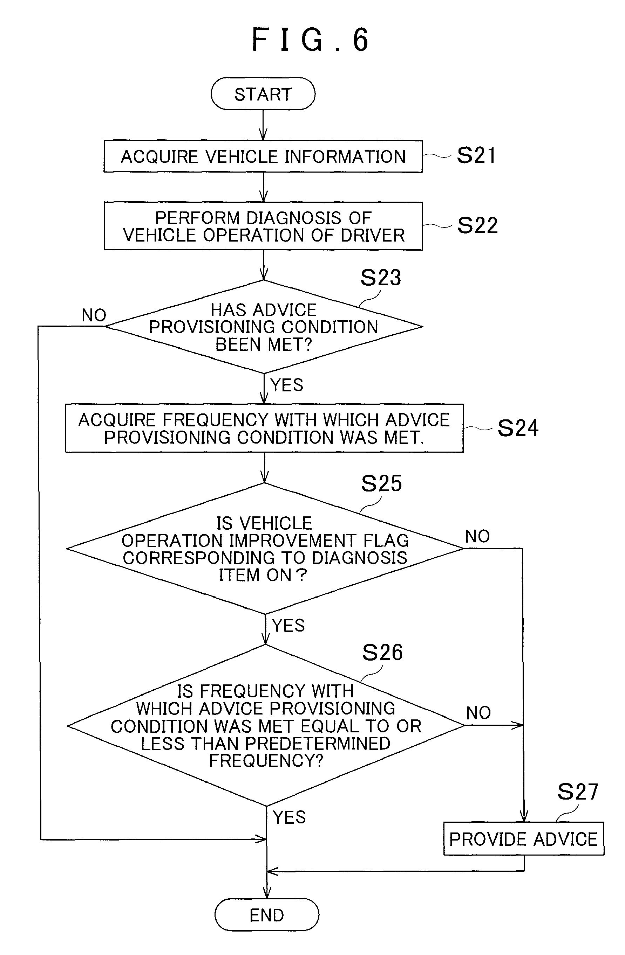

Next, the navigation device according to a second embodiment is described with reference to FIG. 6. The reference numerals in the description below, which are the same as the ones assigned for the structure of the aforementioned navigation device 1 and the like according to the first embodiment in FIGS. 1 to 5, indicate the same or corresponding portions of the structure of the navigation device 1 and the like according to the first embodiment.

A rough structure of the navigation device according to the second embodiment is almost the same as the navigation device 1 according to the first embodiment. Also, the respective control processing is almost the same as the navigation device 1 according to the first embodiment.

However, the navigation device according to the second embodiment determines whether or not to provide the advice in consideration of a frequency with which the advice provisioning condition was met, in addition to whether or not the vehicle operation of the driver is improved after the advice. The navigation device according to the second embodiment differs from the navigation device 1 according to the first embodiment in such point.

Hereinafter, the vehicle operation diagnosis processing program to be executed in the navigation device according to the second embodiment is described with reference to FIG. 6. The vehicle operation diagnosis processing program according to the second embodiment here is executed at intervals of a predetermined time (for example, every 200 msec) after the ACC of the vehicle has been turned on, and diagnoses whether or not the vehicle operation performed by the driver during driving was appropriate in terms of the environment and the safety.

First, at S21, the CPU 41 acquires the vehicle information relating to the vehicle (specifically, the vehicle speed, the accelerator opening level, the braking volume, the presence or absence of idling, the fuel consumption, the inter-vehicle distance to the preceding vehicle, and the like) through various sensors such as the vehicle speed sensor 22, the steering sensor 23, the gyro sensor 24, and the like, or the CAN.

Next, at S22, the CPU 41 performs the diagnosis of the vehicle operation of the driver based on the vehicle information acquired at S21. Note that explanation for diagnosis processing of the vehicle operation executed at S22 is omitted since the processing is the same as the processing at S2 executed in the vehicle operation diagnosis processing program according to the first embodiment.

Subsequently, at S23, the CPU 41 determines from the result of the vehicle operation diagnosis at S22 whether or not the advice provisioning condition of any of the diagnosis items has been met. If it has been determined that the advice provisioning condition of any of the diagnosis items has been met (S23: YES), the procedure goes to S24. On the other hand, if it has been determined that the advice provisioning condition of any of the diagnosis items has not been met (S23: NO), the vehicle operation diagnosis processing program is terminated without performing a provision of the advice.

At S24, the CPU 41 reads out the vehicle operation histories of the driver within a predetermined time in the past (for example, within past 72 hours) from the vehicle operation history DB 32, and acquires the frequency with which the vehicle met the advice provisioning condition in the past, which it has been determined at S23 that has been met.

Next, at S25, the CPU 41 reads out from the RAM 42 the vehicle operation improvement flag corresponding to the diagnosis item to which it has been determined at S23 that the advice provisioning condition has been met, and determines whether or not the flag is ON. That is, the CPU 41 determines whether or not the vehicle operation of the driver after the advice was provided is improved compared to before the advice was provided when the advice on the basis of the same diagnosis result was provided in the past. Note that the explanation of the vehicle operation improvement flag is omitted since it is the same as the one of the navigation device 1 according to the first embodiment.

If it has been determined that the vehicle operation improvement flag corresponding to the diagnosis item to which it has been determined that the advice provisioning condition has been met is ON (S25: YES), that is, if the vehicle operation of the driver after the advice was provided is improved compared to before the advice was provided when the advice on the basis of the same diagnosis result was provided in the past, the procedure goes to S26. On the other hand, if it has been determined that the vehicle operation improvement flag corresponding to the diagnosis item to which it has been determined that the advice provisioning condition has been met is OFF (S25: NO), that is, if the vehicle operation of the driver after the advice was provided is not improved compared to before the advice was provided when the advice on the basis of the same diagnosis result was provided in the past, the procedure goes to S27.

Next, at S26, the CPU 41 determines whether or not the frequency with which the provisioning condition of the advice was met, which was acquired at S24, is equal to or less than a predetermined frequency (that is, the frequency with which the vehicle met the advice provisioning condition in the past, which it has been determined at S23 that has been met). The predetermined frequency here varies according to the provisioning condition of the advice. For example, if the provisioning condition of the advice is "the idling was continuously performed for more than 5 min", the predetermined frequency is set to 1 time per day. If the provisioning condition of the advice is "a practice of the sudden braking operation", the predetermined frequency is set to 1 time per hour.

If it has been determined that the frequency with which the vehicle met the advice provisioning condition in the past, which it has been determined at S23 that has been met, is equal to or less than the predetermined frequency (S26: YES), the vehicle operation diagnosis processing program is terminated without performing a provision of the advice. As a result, for the vehicle operation inevitable for the driver such as a sudden braking in an emergency that rarely occurs even though the driver is normally conducting the safe driving, it is possible to prevent the advice on correcting the vehicle operation from being provided even when the diagnosis result was a negative result.

On the other hand, if it has been determined that the frequency with which the vehicle met the advice provisioning condition in the past, which it has been determined at S23 that has been met, is more than the predetermined frequency (S26: NO), the procedure goes to S27.

Subsequently, at S27, the CPU 41 provides the driver with the advice associated with the advice provisioning condition that has been met using the liquid crystal display 15 and the speaker 16 (refer to FIG. 4).

As described in detail above, in the navigation device 1 according to the second embodiment, a vehicle operation diagnosis method by the navigation device 1, and a computer program executed by the navigation ECU 13 of the navigation device 1, as a result of the diagnosis of the vehicle operation of the driver, if it has been determined that the advice provisioning condition set for each diagnosis item has been met, it is determined whether or not the vehicle operation of the driver after the advice was provided is improved compared to before the advice was provided when the advice on the basis of the same diagnosis result was provided in the past (S25); further it is determined whether or not the frequency with which the vehicle met the advice provisioning condition in the past, which it has been determined that has been met, is equal to or less than the predetermined frequency (S26); and if it has been determined that the vehicle operation of the driver is improved and the frequency with which the vehicle met the advice provisioning condition in the past, which it has been determined that has been met, is equal to or less than the predetermined frequency, the provision of the advice is not performed. Therefore, the advice can be provided after properly evaluating the vehicle operation in terms of the environment and the safety in consideration of a situation of each driver. In addition, it becomes possible to motivate the driver to continue the environmentally-friendly driving and the safe driving, without giving the driver a discomfort feeling to the advice.

For example, for the vehicle operation inevitable for the driver such as a sudden braking in an emergency that rarely occurs even though the driver is normally conducting the safe driving, the advice on correcting the vehicle operation is not provided even when the diagnosis result was a negative result. Therefore, it is possible to provide only the advice determined after properly evaluating the drive operation of the driver.

In addition, it is determined whether or not to provide the advice based on the comparison result of the vehicle operation between before and after the advice was provided, when the advice on the basis of the same diagnosis result was provided in the past. Therefore, it is possible to properly determine whether or not the advice for which the provisioning condition was met is the advice determined after adequately evaluating the drive operation of the driver.

Note that the present invention is not limited to the aforementioned embodiments, and various changes and alternatives may be made without departing from the broad spirit and scope of the underlying principles.

For example, in the first and second embodiments, at normal times, the advice is provided each time the advice provisioning condition has been met. However, the number of times the advice provisioning condition has been met may be counted, and when the counted value has reached a predetermined value, the advice may be provided.

For example, in the "idling analysis" indicated in FIG. 2, the number of times the idling was continuously performed for more than 5 min. is counted, when the counted value has reached the predetermined value (for example, 5), a message as "Turn off the engine even for a short period of time to stop idling." is provided.

In addition, in the first and second embodiments, when the advice provisioning condition has been met, the corresponding advice is provided. However, at a time when the ACC has been turned off, or at regular intervals, the advices associated with the advice provisioning conditions that were met by such time may be provided together.

## Claims

1. A vehicle operation diagnosis device (1) comprising:
an advice provision determination unit (13) for diagnosing vehicle operation of a driver and determining whether or not to provide advice relating to the vehicle operation if a result of the diagnosis has met a predetermined provisioning condition;
an advice provision unit (13) for providing the advice relating to the vehicle operation if the advice provision determination unit has determined to provide the advice; and
a vehicle operation comparison unit (13) for comparing the vehicle operation of the driver before the advice was provided by the advice provision unit with the vehicle operation of the driver after the advice was provided by the advice provision unit,
wherein the advice provision determination unit is configured to determine whether or not to provide the advice, based on a comparison result of the vehicle operation comparison unit when the advice was provided by the advice provision unit in the past.

2. The vehicle operation diagnosis device according to claim 1, wherein
the advice provision determination unit comprises
an improvement determination unit (13) for determining, based on the comparison result of the vehicle operation comparison unit when the advice was provided by the advice provision unit in the past, whether or not the vehicle operation of the driver after the advice was provided by the advice provision unit is improved compared to the vehicle operation of the driver before the advice was provided by the advice provision unit, wherein
when the improvement determination unit has determined that the vehicle operation of the driver is not improved, even if the provisioning condition has been met, said improvement determination unit determines not to perform a provision of the advice by the advice provision unit.

3. The vehicle operation diagnosis device according to claim 1, wherein
the advice provision determination unit comprises:
an improvement determination unit (13) for determining, based on the comparison result of the vehicle operation comparison unit when the advice was provided by the advice provision unit in the past, whether or not the vehicle operation of the driver after the advice was provided by the advice provision unit is improved compared to the vehicle operation of the driver before the advice was provided by the advice provision unit; and
a frequency acquisition unit (13) for acquiring a frequency with which the result of the diagnosis for the vehicle operation of the driver met the provisioning condition, wherein
when the improvement determination unit has determined that the vehicle operation of the driver is improved, if the frequency with which the provisioning condition was met is equal to or less than a predetermined frequency, said frequency acquisition unit determines not to perform a provision of the advice by the advice provision unit.

4. The vehicle operation diagnosis device according to any one of claims 1 to 3, wherein
the advice provision determination unit is configured to determine whether or not to provide the advice based on the comparison result of the vehicle operation comparison unit when the advice on the basis of a same diagnosis result was provided by the advice provision unit in the past.

5. A vehicle operation diagnosis method comprising the steps of
diagnosing vehicle operation of a driver and determining whether or not to provide advice relating to the vehicle operation if a result of the diagnosis has met a predetermined provisioning condition;
providing the advice relating to the vehicle operation if it has been determined to provide the advice at the advice provision determination step; and
comparing the vehicle operation of the driver before the advice was provided at the advice provision step with the vehicle operation of the driver after the advice was provided at the advice provision step,
wherein it is determined at the advice provision determination step whether or not to provide the advice, based on a comparison result at the vehicle operation comparison step when the advice was provided at the advice provision step in the past.

6. A computer program installed in a computer, the computer program causing the computer to execute the functions of:
diagnosing vehicle operation of a driver and determining whether or not to provide advice relating to the vehicle operation if a result of the diagnosis has met a predetermined provisioning condition;
providing the advice relating to the vehicle operation if it has been determined to provide the advice by the advice provision determination function; and
comparing the vehicle operation of the driver before the advice was provided by the advice provision function with the vehicle operation of the driver after the advice was provided by the advice provision function,
wherein the advice provision determination function determines whether or not to provide the advice, based on a comparison result of the vehicle operation comparison function when the advice was provided by the advice provision function in the past.
